# EUROPEAN PATENT SPECIFICATION

(11) **EP 3 789 551 B1**
(45) Date of publication and mention of the grant of the patent: **26.04.2023**
(21) Application number: 19214106.7
(22) Date of filing: 06.12.2019
(51) Int. Cl.: E03F 7/10

(54) **PUMP-STORAGE DEVICE AND PUMP-STORAGE SEWAGE TRUCK INCLUDING THE SAME**
PUMPSPEICHERVORRICHTUNG UND PUMPSPEICHERABWASSERWAGEN DAMIT
DISPOSITIF D'ACCUMULATION PAR POMPAGE ET CAMION DE VIDANGE À ACCUMULATION PAR POMPAGE LE COMPRENANT

(30) Priority: 05.09.2019 TW 108132085
(43) Date of publication of application: 10.03.2021
(73) Proprietor: Ke, Shih-Yuan, Chia Yi Hsien (TW)
(72) Inventor: Ke, Shih-Yuan, Chia Yi Hsien (TW)
(74) Representative: Rowlands, Stuart Michael

(56) References cited:
- US-A- 3 434 598
- US-A1- 2019 177 961

## Description

### BACKGROUND OF THE INVENTION

The present invention relates to a pump-storage device and a pump-storage sewage truck and, more particularly, to a pump-storage device and a pump-storage tank truck for pumping filthy substances, such as sludge, fecal-sewage or chemical pollutants.

Populations are highly concentrated in cities due to urbanization. With the increase of the urban population, the consumption of water and sewage quantity increase, and the sewage treatment has become an important issue. Nowadays, sewage is delivered through sewage pipelines to sewage plants for proper treatment. However, sewage often carries oil stain, sludge, and debris, all of which flow into the treatment pipes, leading to blockage of the pipes. Periodic maintenance is necessary for smooth flow of the pipes. Sewage trucks are an important tool for cleaning filthy substances, such as sludge in gutters, sewage in septic tanks, or chemical pollutants in chemical tanks. A sewage truck can deliver the filthy substances blocking the pipes into a tank and can transport to a professional facility for treatment.

A conventional sewage truck includes a tank for receiving filthy substances. An end of an inlet is in communication with the tank. A vacuum pump is connected to the tank. Before sucking filthy substances, the vacuum pump is started to expel the air in the tank, creating a near vacuum state in the tank to thereby create a vacuum force. The other end of the inlet extends into a bottom of a gutter, a septic tank, or a chemical tank, such that the filthy substances can enter the tank via the inlet.
However, the conventional pump-storage sewage truck has a larger tank and, thus, requires a larger vacuum pump that needs a longer time to create a near vacuum state in the tank. Thus, improvement to the conventional pump-storage devices is necessary.

US2019/177961A1 relates to a pump-storage device including a tank, a treatment container, and a vacuum pump. The treatment container includes a first chamber in communication with an inlet. The first chamber includes a bottom wall having a first valve intercommunicated with a second chamber. The second chamber includes a bottom wall having a second valve. The treatment container includes a first control valve having a first duct in communication with the first chamber, a second duct in communication with the second chamber, and a third duct in communication with the tank. The treatment container includes an actuation cylinder for actuating an actuation rod to extend or retract. A first valve plate and a second valve plate are mounted on the actuation rod for controlling opening and closing of the first valve and the second valve. The treatment container includes a second control valve in communication with the first chamber and the vacuum pump.

### BRIEF SUMMARY OF THE INVENTION

To solve the above problems, an objective of the present invention is to provide a pump-storage device and a pump-storage sewage truck, with the pump-storage device using a small-size gas suction source and proceeding the cleaning operation in a short period of time.

Another objective of the present invention is to provide a pump-storage device and a pump-storage sewage truck for more precisely controlling sucking or discharge of filthy substances.

A further objective of the present invention is to provide a pump-storage device and a pump-storage sewage truck for filtering volatile substances in a gas or liquid in a to-be-pumped environment before discharge, reducing air pollution caused by odor or toxic gases flowing into the ambient air.

When the terms "front", "rear", "left", "right", "up", "down", "top", "bottom", "inner", "outer", "side", and similar terms are used herein, it should be understood that these terms have reference only to the structure shown in the drawings as it would appear to a person viewing the drawings and are utilized only to facilitate describing the invention, rather than restricting the invention.

As used herein, the term "one" or "an" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

As used herein, the term "coupling", "join", "assembly", or similar terms is used to include separation of connected members without destroying the members after connection or inseparable connection of the members after connection. A person having ordinary skill in the art would be able to select according to desired demands in the material or assembly of the members to be connected.

A pump-storage device according to the present invention comprises:
a treatment container including an interior separated by a partitioning board into an upper chamber and a lower chamber, wherein the upper chamber intercommunicates with the lower chamber via a first intercommunication port, wherein the treatment container further includes an inlet intercommunicating with the upper chamber and a second intercommunication port intercommunicating the lower chamber with an outside;
a switching module including a first control valve and a second control valve, wherein the first control valve is configured to control intercommunication between the upper chamber and the lower chamber, and wherein the second control valve is configured to control intercommunication between the upper chamber and a gas suction source;
a telescopic module including an actuation rod and an actuation cylinder controlling telescopic movement of the actuation rod, wherein the actuation rod extends through the first intercommunication port; and
an intercommunication control module including a first fixing block, a second fixing block, and a third fixing block which are mounted from top to bottom in sequence on the actuation rod, wherein an upper stop plate is disposed between the first fixing block and the second fixing block, wherein a lower stop plate is disposed between the second fixing block and the third fixing block, and wherein the upper stop plate and the lower stop plate are elastically supported by an elastic unit.

A pump-storage sewage truck according to the present invention comprises the pump-storage device, a tank, and a transportation tool. The pump-storage device is assembled to the tank. The second intercommunication port of the treatment container intercommunicates with an interior of the tank. The tank and the gas suction source are mounted to the transportation tool.

Thus, in the pump-storage device and the pump-storage sewage truck according to the present invention, the vacuum operation is carried out in a treatment container with a smaller volume, such that a small-size gas suction source can be used, and a near vacuum state can be reached in a short period of time, rapidly starting the cleaning operation. This not only efficiently reduces the operation cost of the pump-storage sewage truck but also significantly improves the pumping operation efficiency. Furthermore, the pump-storage device according to the present invention includes the intercommunication control module using the elastic unit to more precisely control the suction or discharge of the filthy substances, also improving the pumping operation efficiency.

In an example, the elastic unit includes a positioning seat having two ends abutting against a first elastic element and a second elastic element, respectively. The first elastic element elastically abuts against the upper stop plate. The second elastic element elastically abuts against the lower stop plate. Thus, the positioning seat separates the first elastic element from the second elastic element to prevent safety accidents resulting from sparks caused by rubbing between the first and second elastic elements, thereby improving the use safety.

In an example, the intercommunication control module includes a first anti-fouling sleeve and a second anti-fouling sleeve. The first anti-fouling sleeve and the second anti-fouling sleeve are movably mounted around the actuation rod. The first anti-fouling sleeve is located above the positioning seat. A projection of the first anti-fouling sleeve in a radial direction overlaps with a projection of an end of the positioning seat in a radial direction. The second anti-fouling sleeve is located below the positioning seat. A projection of the second anti-fouling sleeve overlaps with a projection of another end of the positioning seat. Thus, the first and second anti-fouling sleeves prevent a large amount of the filthy substances in the treatment container from sticking to the first and second elastic elements, avoiding adverse influence on operation of the first and second elastic elements and improving the operational smoothness.

In an example, the first stop plate and the first fixing block have a gap therebetween when the first elastic element and the second elastic element are not compressed by an external force. Thus, the operational smoothness and operational efficiency are improved.

In an example, the second elastic element is biased to elastically press against the lower stop plate and to press the positioning seat against the second fixing block. Thus, the operational smoothness and operational efficiency are improved.

In an example, the first control valve intercommunicates with the upper chamber via a first duct, intercommunicates with the lower chamber via a second duct, and intercommunicates with the outside of the treatment container via a third duct. When the control valve controls the first duct to intercommunicate with the second duct, the second duct does not intercommunicate with the third duct. When the first control valve controls the first duct not to intercommunicate with the second duct, the second duct intercommunicates with the third duct. Thus, the operational smoothness and operational efficiency are improved.

In an example, the second control valve intercommunicates with the upper chamber via a fourth duct. A protecting unit includes a housing connected to the fourth duct. The housing includes a bottom intercommunicating with the upper chamber. A float is received in the housing. The housing includes a vent located above the float. Thus, when the filthy substances fill the upper chamber and leak into the bottom of the housing, the float floats upwards to block the intercommunication between the upper chamber and the fourth duct, improving the use safety.

In an example, the switching module includes a liquid level detector configured to detect a liquid level in the lower chamber. When the liquid level detector detects that the liquid level reaches a predetermined value, the first control valve is switched between an open state and a closed state. Thus, the operational convenience is improved.

In an example, the switching module includes a timer configured to set a period of time of release, and wherein when the period of time of release expires, the first control valve is switched to an open state. Thus, the operational convenience is improved.

In an example, the switching module includes a filter intercommunicating with the second control valve. The gas suction source intercommunicates with the filter by a gas suction tube. Thus, the gas flowing out of the upper chamber is filtered by the filter before being discharged to the outside, avoiding air pollution.

The present invention will become clearer in light of the following detailed description of illustrative embodiments of this invention described in connection with the drawings.

### DESCRIPTION OF THE DRAWINGS

FIG. 1 is a diagrammatic view of a pump-storage sewage truck including a pump-storage device of an embodiment according to the present invention.
FIG. 2 is a diagrammatic cross sectional view of the pump-storage device according to the present invention.
FIG. 3 shows suction of filthy substances of the pump-storage device of FIG. 2.
FIG. 4 is a portion of FIG. 2, with a second intercommunication port opened.
FIG. 5 is a portion of FIG. 2, illustrating discharge of filthy substances.
FIG. 6 is a view similar to FIG. 2, with a first intercommunication port closed for continuous suction of filthy substances.
FIG. 7 is a view similar to FIG. 2, with the second intercommunication port failed to close.
FIG. 8 is a view similar to FIG. 2, with an actuation rod failed to retract.

### DETAILED DESCRIPTION OF THE INVENTION

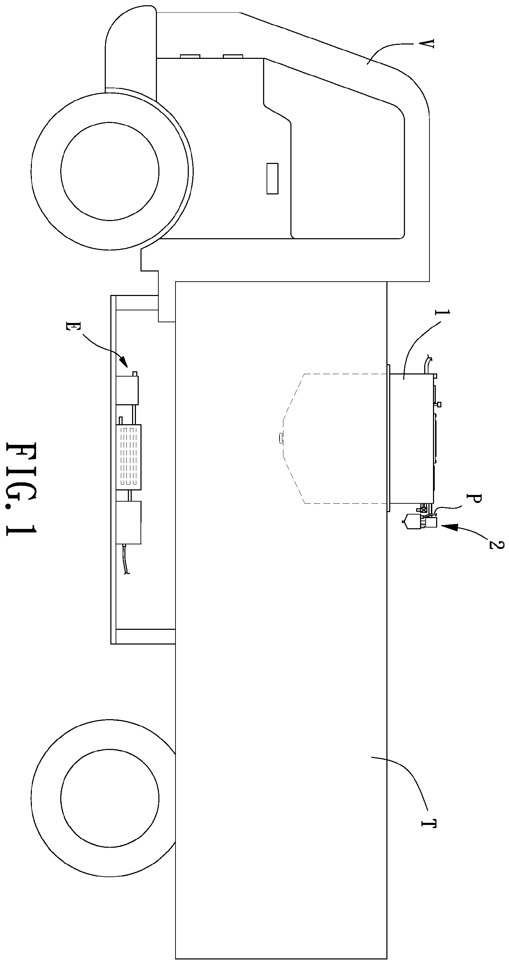

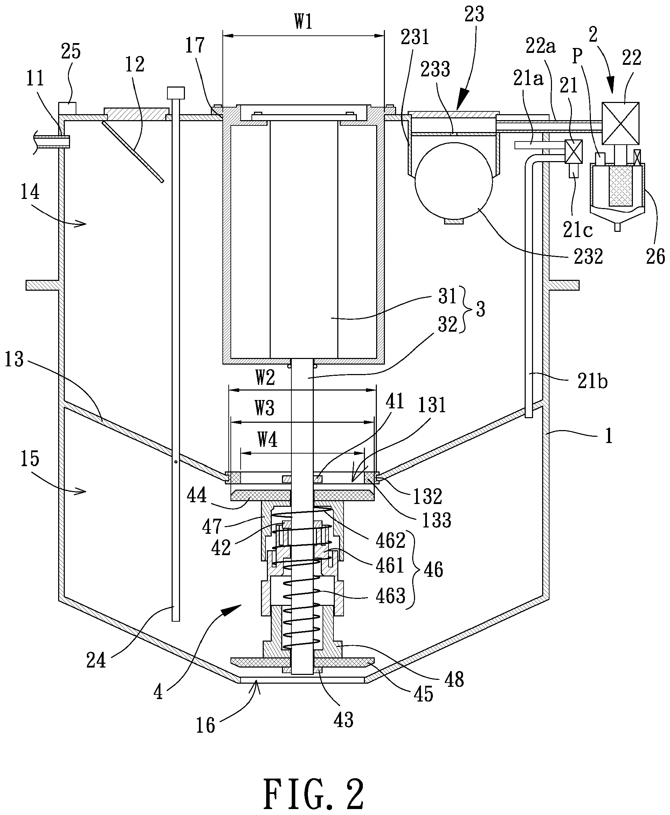

With reference to FIGS. 1 and 2, a pump-storage device of an embodiment according to the present invention can be assembled to a tank **T,** and the tank T and a gas suction source **E** can be mounted on a transportation tool **V** to form a pump-storage sewage truck. The pump-storage device includes a treatment container 1, a switching module 2, a telescopic module 3, and an intercommunication control module 4. The switching module 2 is mounted to the treatment container 1. The telescopic module 3 and an intercommunication control module 4 are mounted inside the treatment container 1.

The treatment container 1 includes an inlet 11 that can be connected to a feeding tube, such that the filthy substances to be sucked can be guided from the feeding tube into an interior of the treatment container 1 via the inlet 11. A swirling member 12 is mounted in the treatment container 1 and is located near the inlet 11, such that filthy substances, such as sludge, fecal sewage, or chemical pollutants, entering the treatment container 1 via the inlet 11 can create a stable swirling flow without incurring large dissipation or large volatilization resulting from impact. The interior of the treatment container 1 is separated by a partitioning board 13 into an upper chamber 14 and a lower chamber 15. The inlet 11 intercommunicates with the upper chamber 14. The partitioning board 13 includes a first intercommunication port 131 for intercommunicating the upper chamber 14 with the lower chamber 15. The partitioning board 13 can be in the shape of a funnel, and the first intercommunication port 131 is located at a lower position, such that the filthy substances guided into the upper chamber 14 can smoothly pass through the first intercommunication port 131 into the lower chamber 15, reducing the residual. The treatment container 1 further includes a second intercommunication port 16 intercommunicating the lower chamber 15 with the outside. The bottom of the treatment container 1 can also be in the shape of a funnel and can be located at a lower position, such that the filthy substances guided into the lower chamber 15 can smoothly pass through the second intercommunication port 16, can timely leave the treatment container 1, and preferably enters the tank **T** that is mounted on the transportation tool **V** and that has a larger volume.

The switching module 2 includes a first control valve 21 intercommunicating with the upper chamber 14 via a first duct 21a, intercommunicating with the lower chamber 15 via a second duct 21b, and intercommunicating with the outside of the treatment container 1 via a third duct 21c. When the first control valve 21 is opened, the first duct 21a intercommunicates with the second duct 21b, and the second duct 21b does not intercommunicate with the third duct 21c. Thus, the upper chamber 14 intercommunicates with the lower chamber 15 and does not intercommunicate with the outside of the treatment container 1. When the first control valve 21 is closed, the second duct 21b intercommunicates with the third duct 21c, and the first duct 21a does not intercommunicate with the second duct 21b. Thus, the upper chamber 14 does not intercommunicate with the lower chamber 15, and the lower chamber 15 intercommunicates with the outside of the treatment container 1.

The switching module 2 further includes a second control valve 22 configured to control intercommunication between the upper chamber 14 and a gas suction source **E.** In a non-restrictive example, this embodiment sets that when the second control valve 22 is open, the gas suction source **E** intercommunicates with the upper chamber 14 and sucks gas out of the upper chamber 14 to reduce the pressure in the upper chamber 14 to be smaller than the atmosphere. When the second control valve 22 is closed, the upper chamber 14 does not intercommunicate with the gas suction source **E.**

More specifically, the second control valve 22 intercommunicates with the upper chamber 14 via a fourth duct 22a. The switching module 2 preferably includes a protecting unit 23 having a housing 231 connected to the fourth duct 22a. The housing 231 includes a bottom intercommunicating with the upper chamber 14. Thus, the fourth duct 22a can intercommunicate an interior of the housing 231 with the upper chamber 14. Furthermore, the housing 231 includes a float 232 received therein and a vent 233 located above the float 232. Thus, when the filthy substances fill the upper chamber 14 and leak into the bottom of the housing 231, the float 232 floats upwards to seal the vent 233, thereby blocking the intercommunication between the upper chamber 14 and the fourth duct 22a.

Furthermore, the switching module 2 further includes a liquid level detector 24, a timer 25, and a filter 26. The liquid level detector 24 is configured to detect a liquid level in the lower chamber 15. When the liquid level detector 24 detects that the liquid level reaches a predetermined value, the first control valve 21 is switched between an open state and a closed state. The timer 25 is configured to set a period of time of release. When the period of time of release expires, the first control valve 21 is switched to the open state. The period of time of release can be set according to the time required for discharging all of the filthy substances in the lower chamber 15 after the second intercommunication port 16 is opened after the predetermined liquid level of the lower chamber 15 is reached. For example, when the filthy substances in the lower chamber 15 can be completely discharged in 3 seconds, the period of time of release is set as 3 seconds. The gas suction source **E** can intercommunicate with the filter 26 via a gas suction pipe **P** and is then connected to the second control valve 22 via the filter 26. Thus, the gas flowing out of the upper chamber 14 can be filtered by the filter 26 to remove odorants, particles, debris, or hazardous materials in the gas. Next, the gas passes through the gas suction pipe **P** and the suction source **E** to the outside.

The telescopic module 3 includes an actuation rod 32 and an actuation cylinder 31 controlling axial telescopic movement of the actuation rod 32. In this embodiment, the actuation cylinder 31 is disposed in a location adjacent to the upper portion of the upper chamber 14. The actuation rod 32 extends through the first intercommunication port 131 and extends into the lower chamber 15 for connection with the intercommunication control module 4.

The intercommunication control module 4 is mounted to the actuation rod 32 and is substantially in the lower chamber 15. The intercommunication control module 4 displaces relative to the treatment container 1 in response to the axial telescopic movement of the actuation rod 32. Specifically, the intercommunication control module 4 includes a first fixing block 41, a second fixing block 42, and a third fixing block 43 which are mounted from top to bottom in sequence on the actuation rod 32 and which are spaced from each other. Thus, the first, second, and third fixing blocks 41, 42, and 43 can move jointly with the actuation rod 32. An upper stop plate 44, a lower stop plate 45, and an elastic unit 46 are mounted around the actuation rod 32 to move vertically relative to the actuation rod 32. The upper stop plate 44 is disposed between the first fixing block 41 and the second fixing block 42. The lower stop plate 45 is disposed between the second fixing block 42 and the third fixing block 43. The elastic unit 46 is disposed between the upper stop plate 44 and the lower stop plate 45 for elastically supporting the upper and lower stop plates 44 and 45. In this embodiment, the elastic unit 46 includes a positioning seat 461 having two ends abutting against a first elastic element 462 and a second elastic element 463, respectively. The first elastic element 462 elastically abuts against the upper stop plate 44. The second elastic element 463 elastically abuts against the lower stop plate 45. Thus, the positioning seat 461 separates the first elastic element 462 from the second elastic element 463 to prevent safety accidents resulting from sparks caused by rubbing between the first and second elastic elements 462 and 463, thereby improving the use safety.

Furthermore, the intercommunication control module 4 preferably includes a first anti-fouling sleeve 47 and a second anti-fouling sleeve 48. The first anti-fouling sleeve 47 and the second anti-fouling sleeve 48 are movably mounted around the actuation rod 32. The first anti-fouling sleeve 47 is located above the positioning seat 461. A projection of the first anti-fouling sleeve 47 in a radial direction overlaps with a projection of an end of the positioning seat 461 in a radial direction. The second anti-fouling sleeve 48 is located below the positioning seat 461. A projection of the second anti-fouling sleeve 48 overlaps with a projection of another end of the positioning seat 461. Thus, the first and second anti-fouling sleeves 47 and 48 prevent a large amount of the filthy substances in the treatment container 1 from sticking to the first and second elastic elements 462 and 463, avoiding adverse influence on operation of the first and second elastic elements 462 and 463. In this embodiment, the first elastic element 462 presses against the first anti-fouling sleeve 47, which, in turn, presses against the upper stop plate 44. Likewise, the second elastic element 463 presses against the second anti-fouling sleeve 48, which, in turn, presses against the lower stop plate 45.

It is worth noting that when the first elastic element 462 and the second elastic element 463 are not compressed by an external force, the upper stop plate 44 presses against a top side of the first anti-fouling sleeve 47 under the action of gravitational force, and the upper stop plate 44 and the first fixing block 41 have a gap therebetween. Preferably, the second elastic element 463 is biased to press against the second anti-fouling sleeve 48 to indirectly and elastically press against the lower stop plate 45 and to press the positioning seat 461 against the second fixing block 42.

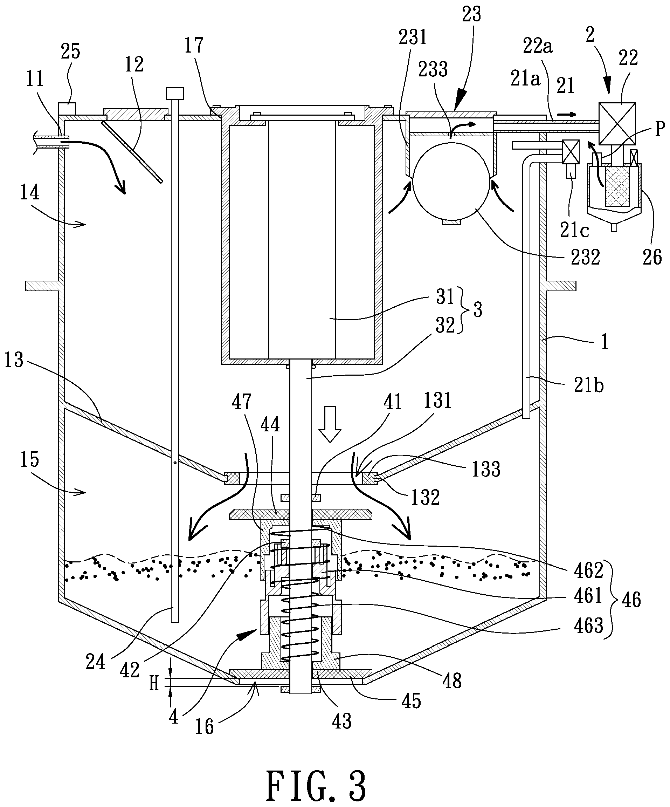

With reference to FIGS. 2 and 3, based on the above structure, when it is desired to suck the filthy substances into the treatment container 1, the first control valve 21 and the second control valve 22 are controlled to open simultaneously, and the actuation cylinder 31 and the gas suction source **E** (see FIG. 1) are activated. Thus, the actuation cylinder 31 operates to extend the actuation rod 32 downwards. The first, second, and third fixing blocks 41, 42, and 43 fixed on the actuation rod 32 also move downwards. After the lower stop plate 45 seals the second intercommunication port 16, the third fixing block 43 still moves downwards to separate from the lower stop plate 45 until the third fixing block 43 is spaced from the lower stop plate 45 by a predetermined spacing **H,** and the actuation rod 32 stops the downward extension. During the downward displacement of the actuation rod 32, the second fixing block 42 continuously moves downward to press against the positioning seat 461 to move downward, compressing the second elastic element 463. The lower stop plate 45 is tightly pressed to seal the second intercommunication port 16, isolating the lower chamber 15 from the tank **T** (see FIG. 1). Gas suction of the tank **T** is prevented, and the time required for creating a near vacuum state in the upper and lower chambers 14 and 15 can be shortened.

On the other hand, the gas suction source **E** can suck the gas in the upper chamber 14 via the gas suction pipe **P.** Since the upper chamber 14 intercommunicates with the lower chamber 15, the upper and lower chambers 14 and 15 can gradually reach the near vacuum state, creating a negative pressure in the treatment container 1. Thus, the filthy substances, such as sludge, fecal sewage, or chemical pollutants, can enter the upper chamber 14 via the inlet 11 and then enter the lower chamber 15 via the first intercommunication port 131. Although a negative pressure is created in the treatment container 1, the second elastic element 463 continuously presses against the lower stop plate 45 to assure reliable closing of the second intercommunication port 16 by the lower stop plate 45. As a result, the lower stop plate 45 will not be lifted towards an interior of the lower chamber 15 under the pressure difference between the exterior pressure and the interior pressure of the treatment container 1.

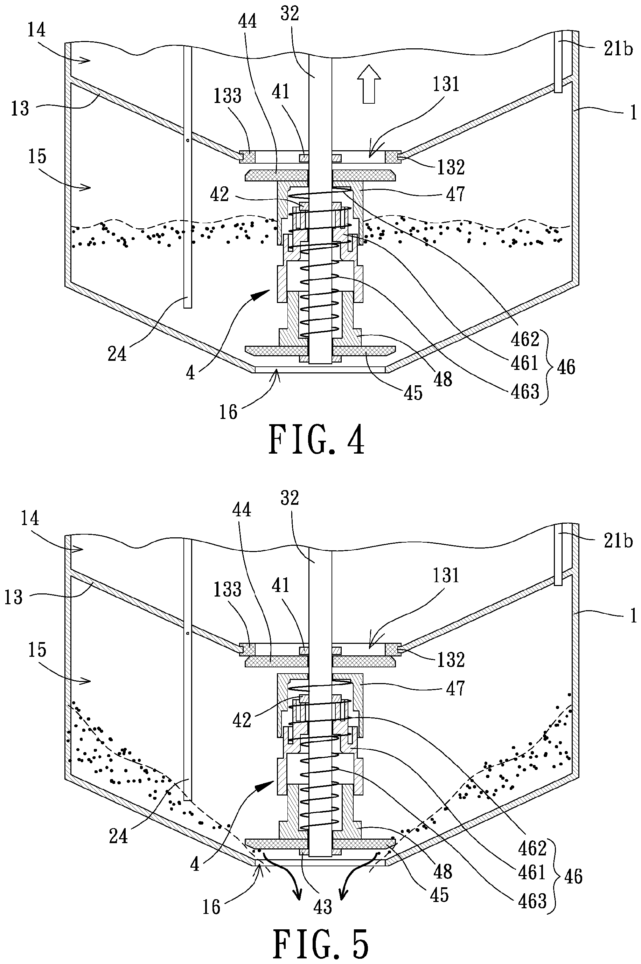

With reference to FIGS. 3 and 4, when the liquid level detector 24 detects that the liquid level in the lower chamber 15 reaches a predetermined value, the first control valve 21 is switched to the closed state, such that the first duct 21a does not intercommunicate with the second duct 21b, and the second duct 21b intercommunicates with the third duct 21c. Thus, the pressure in the lower chamber 15 gradually balances with the outside of the treatment container 1. Furthermore, the actuation cylinder 31 controls the actuation rod 32 to retract upwards, and the first, second, and third fixing blocks 41, 42, and 43 jointly move upwards. During an initial stage of the upward movement of the actuation rod 32, since the second fixing block 42 no longer presses against the positioning seat 461, the compressed second elastic element 463 gradually returns. Nevertheless, since the third fixing block 43 is still spaced from the lower stop plate 45 by the predetermined spacing **H,** the lower stop plate 45 still temporarily closes the second intercommunication port 16 under the elastic force of the second elastic element 463. With the upward movement of the actuation rod 32, the spacing between the third fixing block 43 and the lower stop plate 45 gradually reduces. After the second elastic element 463 returns to its original state, the third fixing block 43 moves upward to a position pressing against the lower stop plate 45 to thereby actuate the lower stop plate 45 upwards, thereby opening the second intercommunication port 16. Thus, the filthy substances stored in the lower chamber 15 can be discharged into the tank **T** (see FIG. 1) via the second intercommunication port 16.

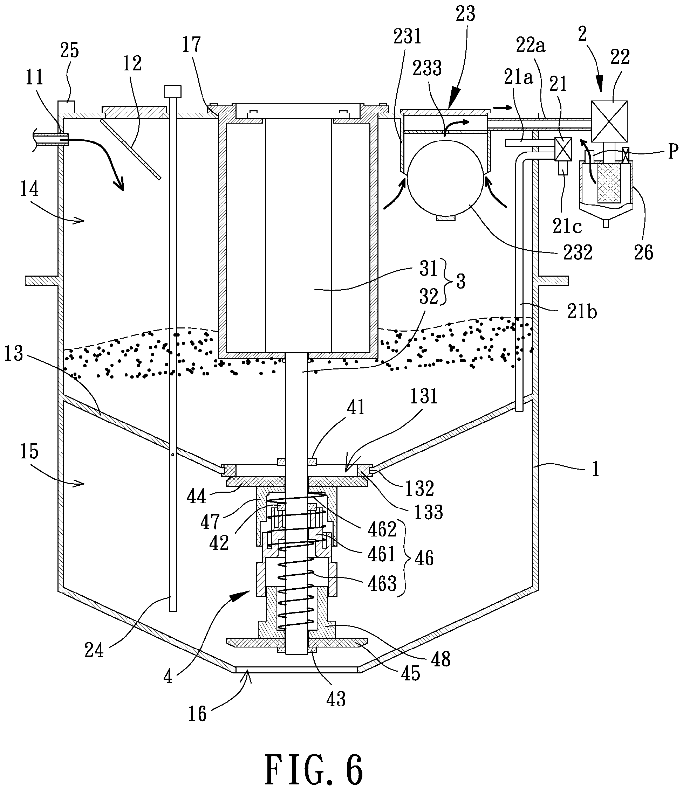

With reference to FIGS. 4 and 5, when the second intercommunication port 16 is open, due to the wind pressure from the tank **T** (see FIG. 1) and the near vacuum state maintained in the upper chamber 14 resulting from continuous gas suction, the upper stop plate 44 can overcome the gravitational force by the pressure difference of the upper and lower chambers 14 and 15 and, thus, floats upwards. The first intercommunication port 131 is rapidly closed to maintain the upper chamber 14 in the vacuum state, permitting continuous feeding (see FIG. 6).

With reference to FIG. 6, when the period of time of release for the lower chamber 15 set by the timer 25 expires, the first control valve 21 is switched to the open state, such that the first duct 21a restores intercommunication with the second duct 21b, and the second duct 21b does not intercommunicate with the third duct 21c. The gas suction source **E** (see FIG. 1) still operates to suck gas out of the upper chamber 14 and the lower chamber 15, and the actuation rod 32 extends downwards again to the position shown in FIG. 3 in which the lower stop plate 45 closes the second intercommunication port 16. Thus, the lower chamber 15 gradually reaches the near vacuum state. Furthermore, during the downward extension of the actuation rod 32, under the action of the weight of the filthy substances in the upper chamber 14 and the action of the downwardly moving first fixing block 41 pressing against the upper stop plate 44 to leave the first intercommunication port 131, the upper stop plate 44 rests on the top end of the first anti-fouling tank 47, and the first elastic element 462 provides a buffering effect. Thus, the first intercommunication port 131 is open, and the filthy substances in the upper chamber 14 enters the lower chamber 15 via the first intercommunication port 131. When the liquid level detector 24 detects that the liquid level in the lower chamber 15 reaches the predetermined value, the first control valve 21 is switched to the closed state, and the actuation rod 32 retracts upwards. The procedure is repeated to complete cleaning of the filthy substances, such as sludge, fecal sewage, or chemical pollutants with high efficiency.

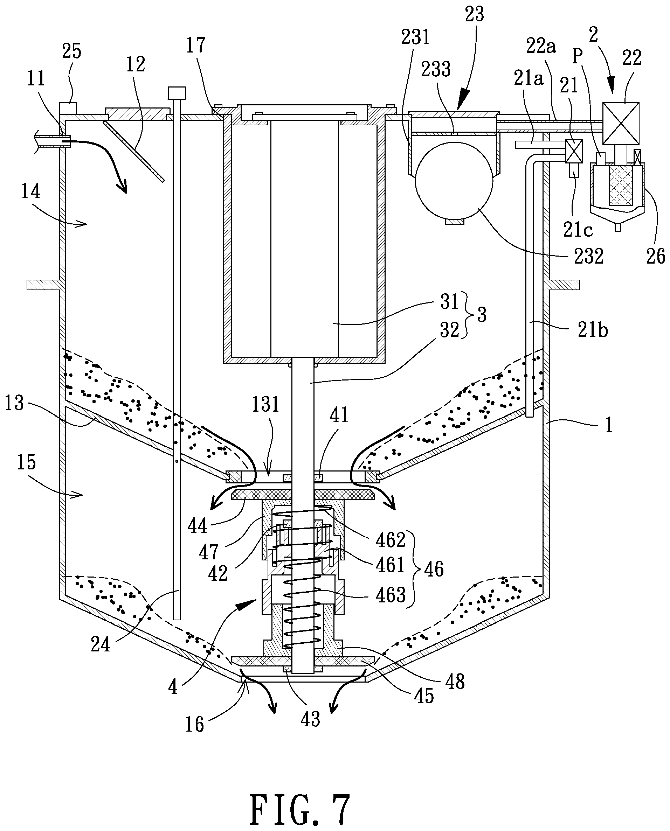

With reference to FIG. 7, when the upward or downward movement of the actuation rod 32 cannot be precisely controlled due to abnormality of the actuation cylinder 31, even if the lower stop plate 45 cannot close the second intercommunication port 16 due to abnormality, the first control valve 21 intercommunicating the first duct 21a with the second duct 21b permits a balance between the pressure in the lower chamber 15 and the pressure in the upper chamber 14. Furthermore, under the action of the weight of the filthy substances stored in the upper chamber 14, the upper stop late 44 can fall along the actuation rod 32 to open the first intercommunication port 131. Thus, the filthy substances flowing into the upper chamber 14 enters the lower chamber 15 via the first intercommunication port 131 and is then discharged into the tank **T** (see FIG. 1) after passing through the second intercommunication port 16. Accordingly, even if the actuation cylinder 31 is abnormal, the suction operation of the filthy substances can still proceed normally without hazard.

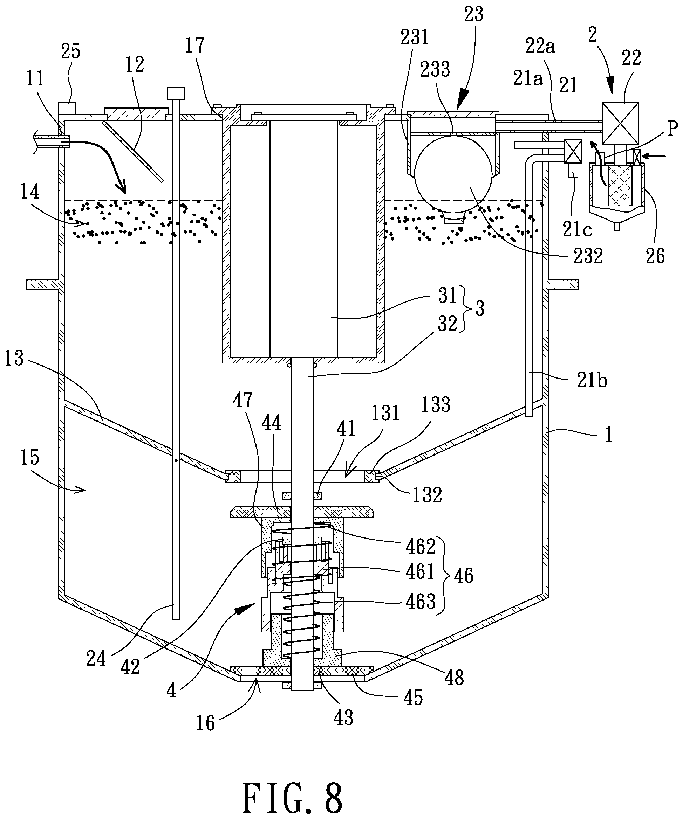

With reference to FIG. 8, when the retraction of the actuation rod 32 cannot be precisely controlled as the liquid level detector 24 is out of order or the actuation cylinder 31 is abnormal, the second intercommunication port 16 remains closed by the lower stop plate 45 on the actuation rod 32. Since the lower chamber 15 cannot be cleaned at regular time, the upper stop plate 44 will not close the first intercommunication port 131, such that the lower chamber 15 and the upper chamber 14 are gradually filled with filthy substances, such as sludge, fecal sewage, or chemical pollutants. Thus, when the filthy substances leak into the bottom of the housing 231 of the protecting unit 2, the float 232 floats upward to block the vent 233, thereby blocking the intercommunication between the upper chamber 14 and the fourth duct 22a. As a result, the filthy substances are prevented from being sucked into the fourth duct 22a, and the filthy substances, such as sludge, fecal sewage, or chemical pollutants, are prevented from being continuously sucked into the upper chamber 14.

With reference to FIG. 1 again, the pump-storage device according to the present invention only has to proceed with vacuum operation of the treatment container 1 of a smaller size. In an example of a treatment container 1 having a radius of 42.5 cm and a height of 65 cm, the volume is 368,655 cm³ (42.5 cm x 42.5 cm x 3.14 x 65 cm). The cross sectional contact area between the filthy substances in the treatment container 1 and the vacuum area in the treatment container 1 is only 5,671 cm² (42.5 cm x 42.5 cm x 3.14). Taking a tank **T** having a radius of 97.5 cm and a height of 560 cm as an example, the volume is 16,715,790 cm³ (97.5 cm x 97.5 cm x 3.14 x 560 cm). In a conventional pumping operation of the tank **T,** the cross sectional contact area between the volatile organic substances in the treatment container 1 and the vacuum area in the treatment container 1 is 109,200 cm² (97.5 cm x 97.5 cm x 3.14), which is 19.26 (109,200/5,671) times of that of the pump-storage device according to the present invention. Namely, the pump-storage device according to the present invention can reduce the air pollution by nearly 95%, because the air pollution caused by the pump-storage device according to the present invention is only about 5% (1/19.26) of that caused by conventional operations for treating the tank **T.** Furthermore, the time required for sucking the treatment container 1 of a smaller size is about 45 (16,715,790 cm³/368,655 cm³) times fastener than that required by conventional operations for treating the tank **T.**

With reference to FIG. 2, in this embodiment, to permit easy installation and maintenance, the treatment container 1 includes an upper hole 17 in a top end thereof, and the partitioning board 13 includes a lower hole 132. The width **W1** of the upper hole 17 and the width **W2** of the lower hole 132 are larger than the diameter **W3** of the lower stop plate 45. Thus, the lower stop plate 45 pre-mounted to the actuation rod 32 can pass through the upper hole 17 and the lower hole 132 for easier subsequent repair and replacement. Furthermore, after the lower stop plate 45 passes through the lower hole 132, an annular pad 133 can be mounted to the lower hole 132 and can define the first intercommunication port 131. Furthermore, the diameter **W4** of the first intercommunication port 131 is smaller than the diameter **W3** of the lower stop plate 45, such that the lower stop plate 45 seals the first intercommunication port 131 from below.

In view of the foregoing, the pump-storage device and the pump-storage sewage truck according to the present invention only have to proceed with vacuum operation of the treatment container 1 with a smaller volume, such that a small-size gas suction source **E** can be used to reach the near vacuum state in a short period of time, rapidly starting the cleaning operation. This not only effectively reduces the operational cost of the pump-storage sewage truck but significantly improves the efficiency of the pumping operation. Furthermore, the pump-storage device according to the present invention includes the intercommunication control module 4 using the elastic unit 46 to more precisely control the suction or discharge of the filthy substances, also improving the pumping operation efficiency.

Furthermore, the pump-storage device according to the present invention uses the filter to filter volatile substances in a gas or liquid in a to-be-pumped environment before discharge, reducing air pollution caused by odor or toxic gases flowing into the environment.

Although specific embodiments have been illustrated and described, numerous modifications and variations are still possible without departing from the scope of the invention. The scope of the invention is limited by the accompanying claims.

## Claims

1. A pump-storage device comprising:
a treatment container (1) including an interior separated by a partitioning board (13) into an upper chamber (14) and a lower chamber (15), wherein the upper chamber (14) intercommunicates with the lower chamber (15) via a first intercommunication port (131), wherein the treatment container (1) further includes an inlet (11) intercommunicating with the upper chamber (14) and a second intercommunication port (16) intercommunicating the lower chamber (15) with an outside;
a switching module (2) including a first control valve (21) and a second control valve (22), wherein the first control valve (21) is configured to control intercommunication between the upper chamber (14) and the lower chamber (15), and wherein the second control valve (22) is configured to control intercommunication between the upper chamber (14) and a gas suction source;
a telescopic module (3) including an actuation rod (32) and an actuation cylinder (31) controlling telescopic movement of the actuation rod (32), wherein the actuation rod (32) extends through the first intercommunication port (131); and
an intercommunication control module (4) including a first fixing block (41), a second fixing block (42), and a third fixing block (43) which are mounted from top to bottom in sequence on the actuation rod (32), wherein an upper stop plate (44) is disposed between the first fixing block (41) and the second fixing block (42), wherein a lower stop plate (45) is disposed between the second fixing block (42) and the third fixing block (43);
the pump-storage device being **characterized in that** the upper stop plate (44) and the lower stop plate (45) are elastically supported by an elastic unit (46).

2. The pump-storage device as claimed in claim 1, wherein the elastic unit (46) includes a positioning seat (461) having two ends abutting against a first elastic element (462) and a second elastic element (463), respectively, wherein the first elastic element (462) elastically abuts against the upper stop plate (44), and wherein the second elastic element (463) elastically abuts against the lower stop plate (45).

3. The pump-storage device as claimed in claim 2, wherein the intercommunication control module (4) includes a first anti-fouling sleeve (47) and a second anti-fouling sleeve (48), wherein the first anti-fouling sleeve (47) and the second anti-fouling sleeve (48) are movably mounted around the actuation rod (32), wherein the first anti-fouling sleeve (47) is located above the positioning seat (461), wherein a projection of the first anti-fouling sleeve (47) in a radial direction overlaps with a projection of an end of the positioning seat (461) in a radial direction, the second anti-fouling sleeve (48) is located below the positioning seat (461), and wherein a projection of the second anti-fouling sleeve (48) overlaps with a projection of another end of the positioning seat (461).

4. The pump-storage device as claimed in claim 2, wherein the upper stop plate (44) and the first fixing block (41) have a gap therebetween when the first elastic element (462) and the second elastic element (463) are not compressed by an external force.

5. The pump-storage device as claimed in claim 2, wherein the second elastic element (463) is biased to elastically press against the lower stop plate (45) and to press the positioning seat (461) against the second fixing block (42).

6. The pump-storage device as claimed in claim 1, wherein the first control valve (21) intercommunicates with the upper chamber (14) via a first duct (21a), intercommunicates with the lower chamber (15) via a second duct (21b), and intercommunicates with the outside of the treatment container via a third duct (21c), wherein when the first control valve (21) controls the first duct (21a) to intercommunicate with the second duct (21b), the second duct (21b) does not intercommunicate with the third duct (21c), and wherein when the first control valve (21) controls the first duct (21a) not to intercommunicate with the second duct (21b), the second duct (21b) intercommunicates with the third duct (21c).

7. The pump-storage device as claimed in claim 1, wherein the second control valve (22) intercommunicates with the upper chamber (14) via a fourth duct (22a), wherein a protecting unit (23) includes a housing (231) connected to the fourth duct (22a), wherein the housing (231) includes a bottom intercommunicating with the upper chamber, wherein a float is received in the housing, wherein the housing includes a vent (233) located above the float (232).

8. The pump-storage device as claimed in claim 1, wherein the switching module (2) includes a liquid level detector (24) configured to detect a liquid level in the lower chamber (15), wherein when the liquid level detector (24) detects that the liquid level reaches a predetermined value, the first control valve (21) is switched between an open state and a closed state.

9. The pump-storage device as claimed in claim 1, wherein the switching module (2) includes a timer (25) configured to set a period of time of release, and wherein when the period of time of release expires, the first control valve (21) is switched to an open state.

10. A pump-storage sewage truck comprising the pump-storage device as claimed in any one of claims 1-9, a tank, and a transportation tool, wherein the pump-storage device is assembled to the tank, wherein the second intercommunication port (16) of the treatment container intercommunicates with an interior of the tank, and wherein the tank and the gas suction source are mounted to the transportation tool.

## Patentansprüche

1. Pumpspeichervorrichtung, umfassend:
einen Aufbereitungsbehälter (1), umfassend einen Innenraum, der durch eine Trennplatte (13) in eine obere Kammer (14) und eine untere Kammer (15) aufgeteilt ist, wobei die obere Kammer (14) über eine erste Verbindungsöffnung (131) mit der unteren Kammer (15) in Verbindung steht, wobei der Aufbereitungsbehälter (1) ferner einen mit der oberen Kammer (14) in Verbindung stehenden Einlass (11) und eine zweite Verbindungsöffnung (16), die die untere Kammer (15) mit einer Außenumgebung in Verbindung setzt, umfasst;
ein Umschaltmodul (2), umfassend ein erstes Steuerventil (21) und ein zweites Steuerventil (22), wobei das erste Steuerventil (21) dazu konfiguriert ist, die Verbindung zwischen der oberen Kammer (14) und der unteren Kammer (15) zu steuern, und wobei das zweite Steuerventil (22) dazu konfiguriert ist, die Verbindung zwischen der oberen Kammer (14) und einer Gassaugquelle zu steuern;
ein Teleskopmodul (3), umfassend eine Betätigungsstange (32) und einen Betätigungszylinder (31), der die Teleskopbewegung der Betätigungsstange (32) steuert, wobei sich die Betätigungsstange (32) durch die erste Verbindungsöffnung (131) erstreckt; und
ein Verbindungssteuermodul (4), umfassend einen ersten Fixierungsblock (41), einen zweiten Fixierungsblock (42) und einen dritten Fixierungsblock (43), die von oben nach unten der Reihe nach an der Betätigungsstange (32) angebracht sind, wobei eine obere Anschlagplatte (44) zwischen dem ersten Fixierungsblock (41) und dem zweiten Fixierungsblock (42) angeordnet ist, wobei eine untere Anschlagplatte (45) zwischen dem zweiten Fixierungsblock (42) und dem dritten Fixierungsblock (43) angeordnet ist;
wobei die Pumpspeichervorrichtung **dadurch gekennzeichnet ist, dass** die obere Anschlagplatte (44) und die untere Anschlagplatte (45) durch eine elastische Einheit (46) elastisch gelagert sind.

2. Pumpspeichervorrichtung nach Anspruch 1, wobei die elastische Einheit (46) einen Positionierungssitz (461) mit zwei Enden, die jeweils an einem ersten elastischen Element (462) bzw. einem zweiten elastischen Element (463) anliegen, umfasst, wobei das erste elastische Element (462) an der oberen Anschlagplatte (44) elastisch anliegt und wobei das zweite elastische Element (463) an der unteren Anschlagplatte (45) elastisch anliegt.

3. Pumpspeichervorrichtung nach Anspruch 2, wobei das Verbindungssteuermodul (4) eine erste Antiverschmutzungshülse (47) und eine zweite Antiverschmutzungshülse (48) umfasst, wobei die erste Antiverschmutzungshülse (47) und die zweite Antiverschmutzungshülse (48) beweglich um die Betätigungsstange (32) angebracht sind, wobei sich die erste Antiverschmutzungshülse (47) über dem Positionierungssitz (461) befindet, wobei ein Vorsprung der ersten Antiverschmutzungshülse (47) in einer Radialrichtung einen Vorsprung eines Endes des Positionierungssitzes (461) in einer Radialrichtung überlagert, sich die zweite Antiverschmutzungshülse (48) unter dem Positionierungssitz (461) befindet, und wobei ein Vorsprung der zweiten Antiverschmutzungshülse (48) einen Vorsprung eines anderen Endes des Positionierungssitzes (461) überlagert.

4. Pumpspeichervorrichtung nach Anspruch 2, wobei die obere Anschlagplatte (44) und der erste Fixierungsblock (41) einen Spalt dazwischen aufweisen, wenn das erste elastische Element (462) und das zweite elastische Element (463) nicht durch eine externe Kraft zusammengedrückt werden.

5. Pumpspeichervorrichtung nach Anspruch 2, wobei das zweite elastische Element (463) gespannt ist, um elastisch gegen die untere Anschlagplatte (45) zu drücken und den Positionierungssitz (461) an den zweiten Fixierungsblock (42) zu drücken.

6. Pumpspeichervorrichtung nach Anspruch 1, wobei das erste Steuerventil (21) über eine erste Leitung (21a) mit der oberen Kammer (14) in Verbindung steht, über eine zweite Leitung (21b) mit der unteren Kammer (15) in Verbindung steht und über eine dritte Leitung (21c) mit der Außenumgebung des Aufbereitungsbehälters in Verbindung steht, wobei, wenn das erste Steuerventil (21) die erste Leitung (21a) steuert, um mit der zweiten Leitung (21b) in Verbindung zu stehen, die zweite Leitung (21b) nicht mit der dritten Leitung (21c) in Verbindung steht, und wobei, wenn das erste Steuerventil (21) die erste Leitung (21a) steuert, um nicht mit der zweiten Leitung (21b) in Verbindung zu stehen, die zweite Leitung (21b) mit der dritten Leitung (21c) in Verbindung steht.

7. Pumpspeichervorrichtung nach Anspruch 1, wobei das zweite Steuerventil (22) über eine vierte Leitung (22a) mit der oberen Kammer (14) in Verbindung steht, wobei eine Schutzeinheit (23) ein mit der vierten Leitung (22a) verbundenes Gehäuse (231) umfasst, wobei das Gehäuse (231) einen mit der oberen Kammer in Verbindung stehenden Boden umfasst, wobei ein Schwimmer in dem Gehäuse aufgenommen ist, wobei das Gehäuse eine Entgasungsöffnung (233) umfasst, die sich über dem Schwimmer (232) befindet.

8. Pumpspeichervorrichtung nach Anspruch 1, wobei das Umschaltmodul (2) einen Flüssigkeitsstanddetektor (24) umfasst, der dazu konfiguriert ist, einen Flüssigkeitstand in der unteren Kammer (15) zu erfassen, wobei, wenn der Flüssigkeitsstanddetektor (24) erfasst, dass der Flüssigkeitsstand einen vorgegebenen Wert erreicht, das erste Steuerventil (21) zwischen einem offenen Zustand und einem geschlossenen Zustand umgeschaltet wird.

9. Pumpspeichervorrichtung nach Anspruch 1, wobei das Umschaltmodul (2) einen Zeitschalter (25) umfasst, der dazu konfiguriert ist, einen Zeitraum der Freigabe einzustellen, und wobei, wenn der Zeitraum der Freigabe abläuft, das erste Steuerventil (21) in einen offenen Zustand umgeschaltet wird.

10. Pumpspeicher-Abwassertankwagen, umfassend die Pumpspeichervorrichtung nach einem der Ansprüche 1-9, einen Tank und ein Transportwerkzeug, wobei die Pumpspeichervorrichtung an dem Tank angebracht ist, wobei die zweite Verbindungsöffnung (16) des Aufbereitungsbehälters mit einem Innenraum des Tanks in Verbindung steht, und wobei der Tank und die Gassaugquelle an dem Transportwerkzeug angebracht sind.

## Revendications

1. Dispositif de stockage par pompage comportant :
un contenant de traitement (1) comprenant une partie intérieure séparée par une cloison de division (13) en une chambre supérieure (14) et une chambre inférieure (15), dans lequel la chambre supérieure (14) est en intercommunication avec la chambre inférieure (15) par le biais d'un premier port d'intercommunication (131), dans lequel le contenant de traitement (1) comprend par ailleurs un orifice d'entrée (11) en intercommunication avec la chambre supérieure (14) et un deuxième port d'intercommunication (16) qui met la chambre inférieure (15) en intercommunication avec un extérieur ;
un module de commutation (2) comprenant une première vanne de commande (21) et une deuxième vanne de commande (22), dans lequel la première vanne de commande (21) est configurée pour commander l'intercommunication entre la chambre supérieure (14) et la chambre inférieure (15), et dans lequel la deuxième vanne de commande (22) est configurée pour commander l'intercommunication entre la chambre supérieure (14) et une source d'aspiration de gaz ;
un module télescopique (3) comprenant une tige d'actionnement (32) et un vérin d'actionnement (31) commandant le mouvement télescopique de la tige d'actionnement (32), dans lequel la tige d'actionnement (32) s'étend au travers du premier port d'intercommunication (131) ; et
un module de commande d'intercommunication (4) comprenant un premier bloc de fixation (41), un deuxième bloc de fixation (42), et un troisième bloc de fixation (43) qui sont montés de haut en bas de manière séquentielle sur la tige d'actionnement (32), dans lequel une plaque de butée supérieure (44) est disposée entre le premier bloc de fixation (41) et le deuxième bloc de fixation (42), dans lequel une plaque de butée inférieure (45) est disposée entre le deuxième bloc de fixation (42) et le troisième bloc de fixation (43) ;
le dispositif de stockage par pompage étant **caractérisé en ce que** la plaque de butée supérieure (44) et la plaque de butée inférieure (45) sont supportées de manière élastique par une unité élastique (46).

2. Dispositif de stockage par pompage selon la revendication 1, dans lequel l'unité élastique (46) comprend un siège de positionnement (461) ayant deux extrémités venant prendre appui contre un premier élément élastique (462) et un deuxième élément élastique (463), respectivement, dans lequel le premier élément élastique (462) vient prendre appui de manière élastique contre la plaque de butée supérieure (44), et dans lequel le deuxième élément élastique (463) vient prendre appui de manière élastique contre la plaque de butée inférieure (45).

3. Dispositif de stockage par pompage selon la revendication 2, dans lequel le module de commande d'intercommunication (4) comprend un premier manchon antisalissures (47) et un deuxième manchon antisalissures (48), dans lequel le premier manchon antisalissures (47) et le deuxième manchon antisalissures (48) sont montés de manière mobile autour de la tige d'actionnement (32), dans lequel le premier manchon antisalissures (47) est situé au-dessus du siège de positionnement (461), dans lequel une partie saillante du premier manchon antisalissures (47) dans une direction radiale chevauche une partie saillante d'une extrémité du siège de positionnement (461) dans une direction radiale, le deuxième manchon antisalissures (48) est situé en-dessous du siège de positionnement (461), et dans lequel une partie saillante du deuxième manchon antisalissures (48) chevauche une partie saillante d'une autre extrémité du siège de positionnement (461).

4. Dispositif de stockage par pompage selon la revendication 2, dans lequel la plaque de butée supérieure (44) et le premier bloc de fixation (41) ont un vide entre eux quand le premier élément élastique (462) et le deuxième élément élastique (463) ne sont pas comprimés par une force externe.

5. Dispositif de stockage par pompage selon la revendication 2, dans lequel le deuxième élément élastique (463) est sollicité pour venir se comprimer de manière élastique contre la plaque de butée inférieure (45) et pour comprimer le siège de positionnement (461) contre le deuxième bloc de fixation (42).

6. Dispositif de stockage par pompage selon la revendication 1, dans lequel la première vanne de commande (21) est en intercommunication avec la chambre supérieure (14) par le biais d'un premier conduit (21a), est en intercommunication avec la chambre inférieure (15) par le biais d'un deuxième conduit (21b), et est en intercommunication avec l'extérieur du contenant de traitement par le biais d'un troisième conduit (21c), dans lequel, quand la première vanne de commande (21) commande le premier conduit (21a) à des fins d'intercommunication avec le deuxième conduit (21b), le deuxième conduit (21b) n'est pas en intercommunication avec le troisième conduit (21c), et dans lequel, quand la première vanne de commande (21) commande le premier conduit (21a) pour ne pas le mettre en intercommunication avec le deuxième conduit (21b), le deuxième conduit (21b) est en intercommunication avec le troisième conduit (21c).

7. Dispositif de stockage par pompage selon la revendication 1, dans lequel la deuxième vanne de commande (22) est en intercommunication avec la chambre supérieure (14) par le biais d'un quatrième conduit (22a), dans lequel une unité de protection (23) comprend un logement (231) raccordé au quatrième conduit (22a), dans lequel le logement (231) comprend une partie inférieure en intercommunication avec la chambre supérieure, dans lequel un flotteur est reçu dans le logement, dans lequel le logement comprend un évent (233) situé au-dessus du flotteur (232).

8. Dispositif de stockage par pompage selon la revendication 1, dans lequel le module de commutation (2) comprend un détecteur de niveau de liquide (24) configuré pour détecter un niveau de liquide dans la chambre inférieure (15), dans lequel, quand le détecteur de niveau de liquide (24) détecte que le niveau de liquide atteint une valeur prédéterminée, la première vanne de commande (21) est commutée entre un état ouvert et un état fermé.

9. Dispositif de stockage par pompage selon la revendication 1, dans lequel le module de commutation (2) comprend une minuterie (25) configurée pour régler une période de temporisation, et dans lequel, quand la période de temporisation expire, la première vanne de commande (21) est commutée pour passer sur un état ouvert.

10. Camion pour eaux usées à stockage par pompage comportant le dispositif de stockage par pompage selon l'une quelconque des revendications 1 à 9, une citerne, et un outil de transport, dans lequel le dispositif de stockage par pompage est assemblé sur la citerne, dans lequel le deuxième port d'intercommunication (16) du contenant de traitement est en intercommunication avec une partie intérieure de la citerne, et dans lequel la citerne et la source d'aspiration de gaz sont montées sur l'outil de transport.
